## Europäisches Patentamt
## European Patent Office
## Office européen des brevets

(19)

(11) Publication number: **0 175 835**
**B1**

(12)

# EUROPEAN PATENT SPECIFICATION

(45) Date of publication of patent specification: **29.11.89**

(51) Int. Cl.⁴: **G 02 B 26/10**

(21) Application number: **85103725.9**

(22) Date of filing: **28.03.85**

---

(54) Improved optical scanner.

---

(30) Priority: **10.04.84 US 598804**

(43) Date of publication of application:
**02.04.86 Bulletin 86/14**

(45) Publication of the grant of the patent:
**29.11.89 Bulletin 89/48**

(84) Designated Contracting States:
**CH DE FR IT LI NL SE**

(56) References cited:
**EP-A-0 123 038**
**AU-B- 516 790**
**DE-A-3 215 564**
**DE-B-2 009 312**
**US-A-2 960 001**

(73) Proprietor: **KOLLMORGEN TECHNOLOGIES CORPORATION**
**66 Gatehouse Road**
**Stamford Connecticut 06902 (US)**

(72) Inventor: **Taylor, William H.**
**Plain Road**
**South Deerfield, Mass. 01373 (US)**

(74) Representative: **Königseder, geb. Egerer, Claudia**
**Zugspitzstrasse 65**
**D-8104 Grainau (DE)**

---

Courier Press, Leamington Spa, England.

## Description

This invention relates to optical scanners, and more particularly, to improvements for a compact optical scanner of the type disclosed in patent application No. 84101585.2 filed February 16, 1984 and published under No. 0123038. In the optical scanner disclosed in said pending patent application No. 84101585.2, high speed vertical scanning is achieved using a low speed moving frame mirror to reflect linear image traces to a strip mirror. High speed horizontal scanning is achieved using a circular array of concave reflectors on a rotating scanning disc to scan the linear image trace on the strip mirror. The strip mirror is separated from the concave reflectors by a distance corresponding to the reflector focal length, is slanted, and is preferably curved to correspond to the arc of the concave reflectors on the scanning disc. As the scanning disc rotates, successive concave reflectors scan the strip mirror image and thereby scan successive horizontal traces. The strip mirror image is reflected from the concave reflectors in a collimated beam which is focussed onto a suitable detector which provides an electrical signal corresponding to the detected radiation intensity. A collection optic is used to focus the collimated image beam onto the detector.

Although the optical scanner of the prior application is a marked improvement over prior orthogonal pattern scanners, certain disadvantages associated with that structure can exist in some circumstances.

First of all, the requirement of an independent collection optic may be too cumbersome or expensive for some applications.

It is, therefore, an object of the present invention to provide an optical scanner which does not require an independent optical element as collection optic. A further problem arises in relation to detection of spurious radiation, particularly in thermal imaging systems. Spurious radiation is any radiation which reaches the detector from sources other than the image being scanned.

It is, therefore, a further object of the present invention to suppress spurious radiation and ensure that only radiation from the image being scanned is detected. Yet another problem which arises in the optical scanner when a curved strip mirror is used is decreased system resolution due to "walk-off" of the image relative to the detector. This phenomenon is the result of image rotation caused by projecting a linear horizontal trace onto a curved strip mirror for accurate scanning by the concave reflectors.

While the walk-off may be tolerable for some applications, it is a further objective of the present invention to provide detection of an image scanned from the desirable curved strip mirror configuration without walk-off. It is a further object of the invention to provide strip mirror configurations which allow reflection of the image from the concave reflectors without vignetting.

In a typical scanning system according to the invention, a scene is scanned in an orthogonal pattern including means for producing linear scanning traces in one of the orthogonal directions, characterized in that it comprises a strip mirror, an imaging means producing, in succession, said linear scanning traces on said strip mirror, a rotating disk including a circular array of concave reflectors on a plane surface thereof for scanning in the other orthogonal direction, said strip mirror being separated from said concave reflectors by a predetermined distance, radiation detecting means positioned to detect the intensity of radiation reflected by said concave reflectors, whereby said predetermined distance is chosen so that radiation reflected from said strip mirror is directly focussed by said concave reflectors onto the radiation detecting means.

In a preferred embodiment, said strip mirror is curved and said concave reflectors focus radiation reflected from said strip mirror in an arc of focal points corresponding to the scanning sweep of the concave reflector, and said radiation detecting means is formed in an arc corresponding to the arc of focal points and positioned to receive radiation reflected from said concave reflectors, and said concave reflectors are ellipsoidal with said strip mirror positioned at the first focus and said radiation detecting means positioned at the second focus of said ellipsoidal concave reflector.

In another preferred embodiment, a scene is scanned in an orthogonal pattern including means for producing linear scanning traces in one of the orthogonal directions, characterized in that it comprises a strip mirror, an imaging means producing, in succession, said linear scanning traces on said strip mirror, a rotating disk including a circular array of concave reflectors on a plane surface thereof for scanning in the other orthogonal direction, said strip mirror being separated from said concave reflectors by a predetermined distance, radiation detecting means positioned to detect the intensity of radiation reflected by said concave reflectors, whereby said strip mirror is curved and configured as a section of a toroidal surface having a radius equal to the radius of the arc formed by said concave reflectors on said scanning disc.

In a scanning system according to the invention a scene is scanned in an orthogonal pattern including means for producing linear scanning traces in one of the orthogonal directions, characterized in that it comprises a strip mirror, an imaging means producing, in succession, said linear scanning traces on said strip mirror, a rotating disk including a circular array of concave reflectors on a plane surface thereof for scanning in the other orthogonal direction, said strip mirror being separated from said concave reflectors by a predetermined distance, radiation detecting means positioned to detect the intensity of radiation reflected by said concave reflectors, whereby said strip mirror is curved and configured as a section of a spherical surface and having a radius in a plane parallel to the plane surface of said scanning disk equal to the radius of the arc formed by said concave reflectors on said scanning disk.

In a scanning system in accordance with the invention, a scene is scanned in an orthogonal pattern including means for producing linear scanning traces in one of the orthogonal directions, characterized in that it comprises a strip mirror, an imaging means producing, in succession, said linear scanning traces on said strip mirror, a rotating disk including a circular array of concave reflectors on a plane surface thereof for scanning in the other orthogonal direction, said strip mirror being separated from said concave reflectors by a predetermined distance, radiation detecting means positioned to detect the intensity of radiation reflected by said concave reflectors, whereby said predetermined distance is equal to the focal length of the concave reflectors, a parabolical roof mirror positioned in the optical path of the collimated beam from said concave reflectors, focussing means positioned in the optical path between said roof mirror and said radiation detecting means for focussing said collimated beam onto the radiation detecting means.

In a scanning system in accordance with the invention, a scene is scanned in an orthogonal pattern including means for producing linear scanning traces in one of the orthogonal directions, characterized in that it comprises a strip mirror, an imaging means producing, in succession, said linear scanning traces on said strip mirror, a rotating disk including a circular array of concave reflectors on a plane surface thereof for scanning in the other orthogonal direction, said strip mirror being separated from said concave reflectors by a predetermined distance, radiation detecting means positioned to detect the intensity of radiation reflected by said concave reflectors, whereby said predetermined distance is equal to the focal length of the concave reflectors, focussing means positioned in the collimated beam in the optical path between the concave reflectors and the radiation detecting means, and whereby potential spurious radiation surfaces have reflective covering and are oriented so that radiation from the radiation detecting means is reflected back to said detecting means.

In another preferred embodiment of the present invention spurious radiation is prevented from reaching the detector by optical and thermal baffling. When a collection optic is used to focus the image reflected from the concave reflectors onto the detector, the arcuate scanning sweep of the image from the concave reflectors occupies only a portion of the collection optic pupil. Optical baffling comprising a cold shield and spherical baffle mirror limit the detector field of view to the portion of the collection optic aperture which is occupied by the collimated image reflected from the concave reflectors. Spurious radiation from other potential sources within the collection optic pupil is prevented from reaching the detector by highly reflective surfaces covering such potential sources. Spurious radiation from sources outside the collection optic pupil cannot be reflected to the collection optic and, hence, to the detector since all surfaces within the collection optic pupil are machined and polished to a flat, highly reflective surface and aligned so that the only radiation which can be reflected to the collection optic is a retroreflection of radiation which originated in the area of the detector. Radiation originating in the area of the detector is suppressed by maintaining the detector area at a very low temperature, typically 77° Kelvin. These baffling techniques effectively prevent detection of any spurious radiation. In addition, non-uniform image detection resulting from variation in the angle of incidence of the image upon the detector during the scanning sweep is overcome by providing means for shading the system collection aperture to provide uniform image detection across the entire detector field of view.

In further embodiments of the invention the image rotation or "walk-off" introduced by the arcuate scanning of a linear image projected onto a curved strip mirror is corrected.

This is achieved according to the invention by using a stationary, off-axis parabolic reflector having a base radius of curvature equal to the scanning disk radius measured to the center of the concave reflectors is provided as the collection optic. The parabolic reflector is positioned to effectively focus the image at the scanning disk axis.

The "walk-off" may also be corrected by another preferred embodiment of the invention. A paraboloidal roof mirror is provided to counter-rotate the collimated image during the scanning sweep so as to null the effects of walk-off. Proper nulling of walk-off occurs when the radius of intersection of the roof mirror paraboloidal sections equals twice the radius of the scanning disk measured to the concave reflectors.

In another preferred embodiment of the invention, toroidal and spherical strip mirror configurations are provided which intercept all image rays from the field of view in a similar manner and create a collimated or telecentric image reflected from the concave reflectors without vignetting.

The manner in which the invention is achieved can be better understood with reference to the drawings.

Fig. 1 is a partial perspective view of the scanning apparatus according to the preferred embodiment of the invention showing optical paths as the image is focussed by the concave reflectors during scanning.

Fig. 2 is a partial perspective view of another preferred embodiment of the scanning apparatus showing optical paths during scanning.

Fig. 3 is a plan view of a detector array arranged as an arc.

Fig. 4 is a partial elevation view of the embodiment of the scanning apparatus of Fig. 2.

Figs. 4A—C are partial elevation views of the embodiment of the scanning apparatus shown in Fig. 4 illustrating various optical paths and suppression of spurious radiation.

Fig. 5A is a partial elevation view of the preferred embodiment of the scanning apparatus of Fig. 2 illustrating part of the system baffling.

Fig. 5B is a plan view of the system collection aperture.

Fig. 6 is a plan view of the system collection aperture illustrating shading.

Fig. 7 is a partial elevation view of a scanning apparatus with an off-axis parabolic reflector as collection optic.

Fig. 8 is an elevation view of another preferred embodiment of the scanning apparatus showing the collimated image folded to an off-axis parabolic reflector as the collection optic.

Fig. 9 is a plan view illustrating the construction of a paraboloidal roof mirror.

Fig. 10 is an elevation view of a further preferred embodiment of the scanning apparatus having a paraboloidal roof mirror as an image rotation optic.

Fig. 11 is a perspective illustration of a strip mirror constructed in accordance with a still further embodiment of the invention as a section of a toroid.

Fig. 12 is a perspective illustration of a strip mirror constructed in accordance with the Fig. 11 embodiment of the invention as a section of a sphere.

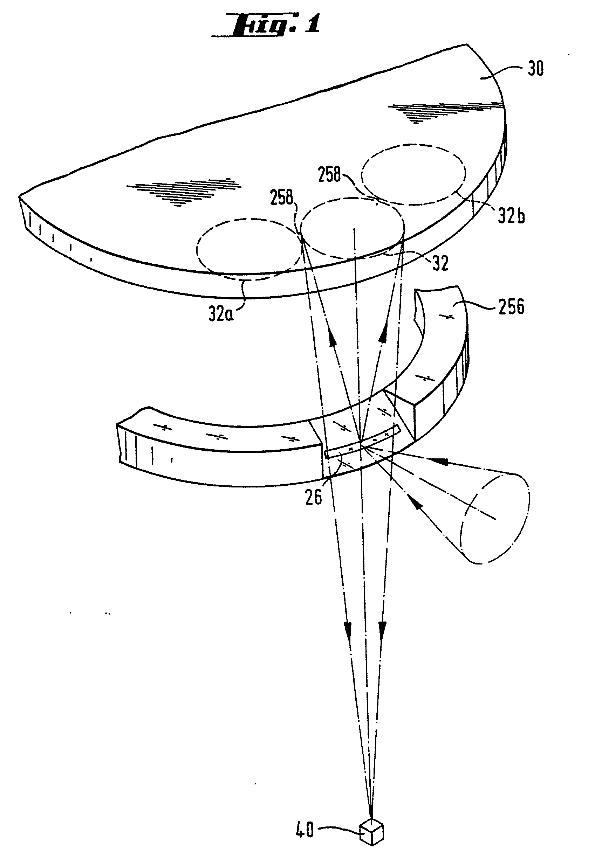

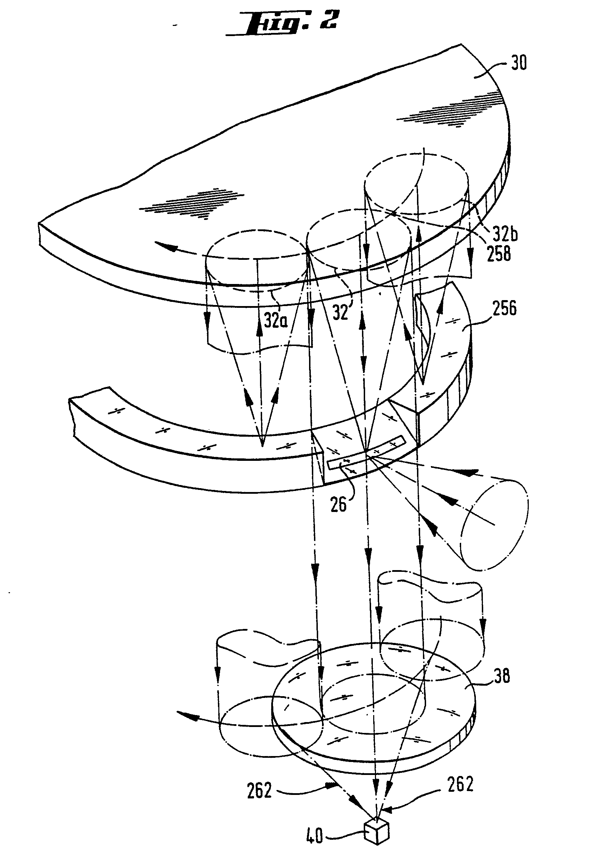

The basic system according to the invention is illustrated in Figures 1 and 2. A scene is scanned vertically by an oscillating low speed framing mirror and a linear image trace is projected onto curved strip mirror 26 to be scanned horizontally by moving concave reflectors 32 on a high speed rotating scanning disc 30, all in accordance with patent application No. 84101585.2.

In general, the scanned radiation from the scene is focussed on a detector 40 which provides an electrical signal corresponding to the intensity of the detected radiation. The system thus scans the scene and provides an electrical signal suitable for controlling beam intensity in a television like video display.

In the first preferred embodiment of the present invention shown in Fig. 1, stationary curved strip mirror 26 is positioned and concave reflectors 32 are configured such that the image reflected from the curved strip mirror 26 is focussed by the concave reflectors 32. The image formed by concave reflectors 32 lies in an arcuate locus of points as shown in Fig. 1 corresponding to the scanning sweep of the concave reflector across the strip mirror. The preferred method of detecting the arcuate image formed without a collection optic is to arrange a detector array in the shape of the arc as shown in Fig. 3, corresponding to the arc of focal points. The arcuate detector array 240 is dimensioned to equal the direct projection of the strip mirror. Strip mirror image 242 is inverted and tangent to detector array 240 for all points in the scanning sweep and, therefore, some image misalignment or "walk-off" will occur at off-axis image points. The arcuate detector array does suffer from some inaccuracy due to image misalignment, but the advantageous elimination of the collection optic is desirable where the extra optical element is too costly or cumbersome for the particular application. In this embodiment, the preferred contour of the concave disc reflectors is ellipsoidal with the strip mirror placed at the first focus and the detector array placed at the second focus of the ellipsoidal concave reflector. This configuration prevents on-axis aberrations. The detectors are preferably activated in a sequence corresponding to the sweep of the scanning disc.

In the embodiment of the invention shown in Figures 2, 4 and 5A, radiation from the scene is reflected upwardly from curved strip mirror 26 onto concave reflector 32 and then downwardly past the strip mirror in a collimated beam. Collimation of the image is achieved by dimensioning the concave reflectors to have a focal length corresponding to the distance between scanning disc 30 and strip mirror 26. The concave reflectors 32 preferably have a parabolic contour. The collimated beam emerging from the concave reflectors 32 passes through a collector lens 38 which focusses the beam onto detector 40. The aperture of the collector lens must be sufficiently large to accommodate the collimated image beam at all operable reflector positions in the scanning sweep and should be substantially free of aberrations. In optical imaging systems and, more particularly, thermal imaging systems, detection of spurious radiation is undesirable. Spurious radiation is radiation which does not originate from the image being scanned but which nonetheless reaches the detector. The second preferred embodiment of the present invention effectively supresses all spurious radiation.

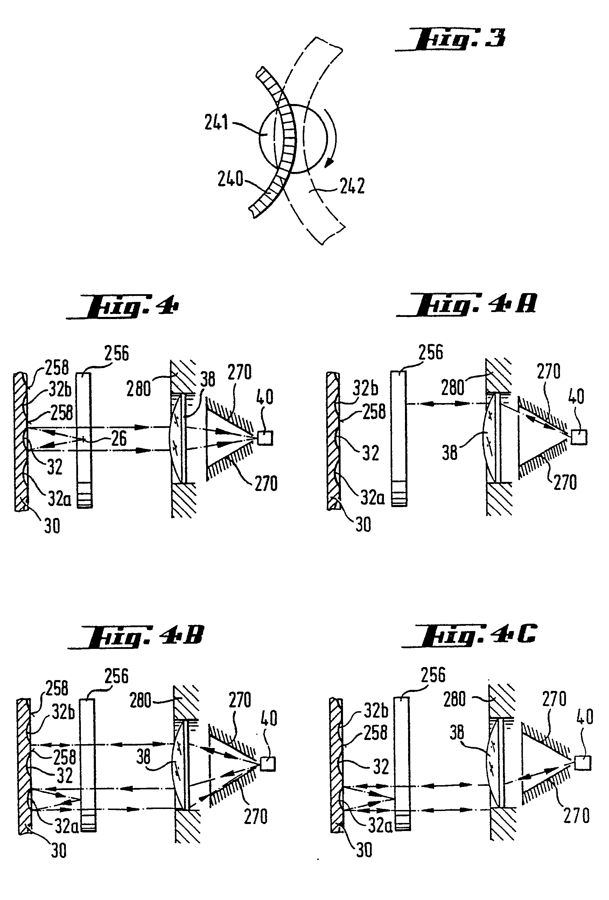

Referring to Figures 2 and 4, spurious radiation may reach detector 40 if emitted from bodies within the field of view of the detector or reflected to the detector via the collector lens 38 by such surfaces as the strip mirror support 256, neighboring reflectors 32a and 32b, surface 258 of scanning disc 30 between adjacent concave reflectors, and collection lens housing 280. In thermal imaging systems a cold shield 270 is commonly positioned around the detector 40 (Fig. 4) to reduce the field of view of the detector 40 to include only radiation reaching the detector 40 via the collection optic. The cold shield 270 is cooled to the temperature of the Dewar flask associated with the detector 40 and, hence, does not emit any significant radiation.

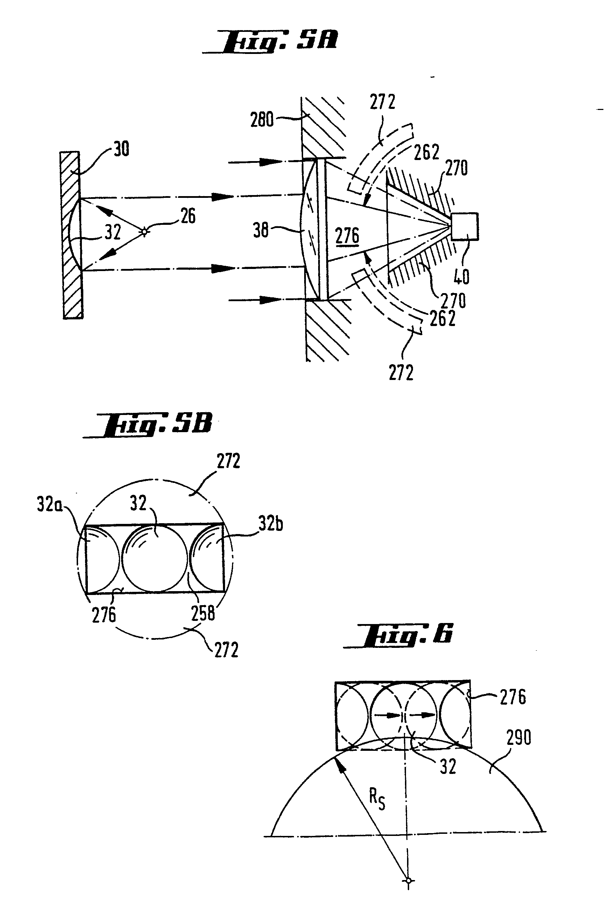

In the imaging system, a pixel of the scanned image is focussed on the detector at any given moment via the collection lens. The cold shield conforms to the collection aperture and, therefore, excludes radiation other than that passing through the collection lens. In the present system, the scanned pixel image travels across only a portion of collection lens 38. Therefore, the collection aperture of the system may be further restricted by reducing the field of view of detector 40 with additional shielding. Referring to Figures 5A and 5B, collection aperture 276 is defined by cold shield 270 and a spherical baffle mirror 272. The spherical baffle mirror 272 is dimensioned such that the shape of collection aperture 276 is rectangular and corresponds to the arc swept by concave reflector 32 across collection lens 38. Consideration of Figures 2, 5A and 5B shows that the combined shielding provided by cold shield 270 and spherical baffle mirror 272 prevents radiation originating within the field of view of detector 40 but outside collection aperture 276 from reaching the detector directly. Therefore, the only spurious radiation which may reach detector 40 must be emitted from a body within the view of the collection aperture, either directly or by reflection.

Another source of distortion in optical imaging systems is variation in the brightness of the display image as a scene of uniform radiance is scanned. The most common sources of this problem, vignetting of the optical pupil and variation in optical transmission, are generally not present in the scanning system according to the present system. Vignetting is caused by loss of the optical rays during the scan, which does not occur with the present invention. In addition, the high quality optics of the present system make variations in optical transmission unlikely. This is particularly true of those embodiments with reflective optics which do not involve changes in mediums of transmission. The only remaining brightness variation comes from the non-uniform detection of image rays caused by the changing angle of incidence of the image rays upon detector 40 corresponding to the continuum of scan positions. (See Figures 2 and 4). The brightness variation due to this angular change across the field of view can be tolerated for most applications. In precision applications, however, this variation in brightness may be compensated for by appropriate "shading" as shown in Fig. 6.

Collection aperture 276 is partially obscured by shading screen 290, shown to be circular. $R_s$ is empirically determined so that the radiation incident upon detector 40 is reduced at points of peak image brightness to a uniform level across the entire collection aperture 276, thereby achieving constant image brightness for all scan positions. The contour of shading screen 290 is selected for the particular application and may, in some instances, be other than circular.

Comprehensive suppression of spurious radiation from potential sources within the field of view of the detector via the collection aperture can be achieved by coating all such sources with a highly reflective coating. Spurious radiation from sources outside the collection aperture is prevented from being reflected to the collection aperture by orienting the reflective surfaces within the collection aperture so that the detector, in effect, sees itself. Since the detector is maintained at a very low temperature, typically 77° Kelvin, the detector in viewing itself sees a cold surface which does not emit any significant radiation. Similarly, since a reflective surface does not act as a source of thermal radiation, proper orientation of the reflective surface causes that surface, in effect, to disappear.

An arrangement using reflective surfaces to eliminate sources of spurious radiation is shown in Figures 2 and 4A—C. The support 256 for the strip mirror 26 lies in a plane perpendicular to the optical axis of collection lens 38. Both flat surfaces of the mirror support are coated with a highly reflective material. The flat surface of disc 30 on the side toward the collection lens 38 is also coated with a reflective material so as to provide a reflective flat surface area 258 in the region between adjacent concave reflectors 32. The collection lens housing 280, which supports collection lens 38, also is coated with reflective material on the surface facing toward scanning disc 30.

The manner in which the various reflective surfaces eliminate spurious radiation is illustrated separately in Figures 4A—C. Fig. 4A illustrates the reflective path from the detector side of the mirror support such that the detector, in effect, sees itself in the reflection from the near side of the support. Fig. 4B similarly illustrates how the scanning disc side of the mirror support causes the detector to, in effect, view itself via the flat surface of the scanning disc and a neighboring concave reflector 32a. Finally, Fig. 4C illustrates how reflections from collection lens support 280 via concave reflector 32a and the scanning disc side of strip mirror support 256 also cause the detector to view itself. In the two dimensional illustrations, light may appear to pass through the opaque strip mirror and strip mirror support. However, the rays shown are merely representative of all rays in the collimated light beam and the strip mirror support only causes a stipe-like shadow in that beam. The use of a curved strip mirror with a multiple detector array can result in distortion caused by a "walk-off" phenomenon. This phenomenon results from optical rotation of the curved strip mirror image relative to the detector array occurring at off-axis image positions in the scanning sweep. The effect of this rotational misalignment upon a single detector element system is minimal since the only relevant parameter in such a system is the amount, not alignment, of radiation detected. In the single detector element system the amount of radiation which goes undetected due to rotational misalignment is generally insignificant since the detector element will nonetheless be activated by the radiation which is detected. For a single detector element system rotational misalignment, at worst, results in reduced sensitivity for off-axis image points. This can be corrected either by shading or intensity compensation in the electronic circuitry receiving the detector element signal. However, with a multiple detector array, walk-off caused by rotational misalignment has the more detrimental effect of reducing system resolution. This reduced resolution is due to the fact that pixel radiation which simply goes undetected in the single detector element system overlaps and is detected by neighboring detector elements in the multiple detector array. Serious degradation of image quality can result as the number of detector elements is increased. In the third preferred embodiment of the present invention rotational distortion is corrected using a stationary, off-axis parabolic reflector as the collection optic. The parabolic reflector is positioned to effectively focus the image at the scanning disc axis.

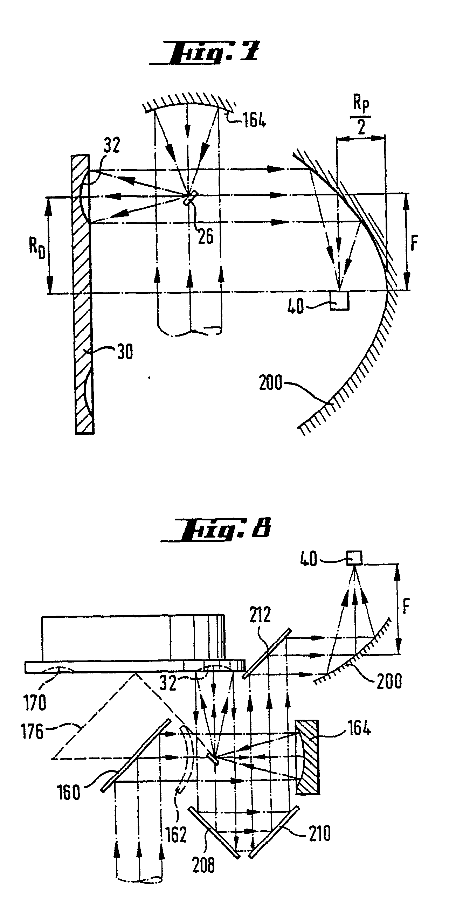

Referring to Fig. 7, a parabolic reflector 200 is included having a base radius of curvature $R_P$ equal to the radius $R_D$ of scanning disc 30. Parabolic reflector 200 is positioned such that its operational focal length F equals twice the on-axis focal length. Linear detector array 40 is positioned on and perpendicular to the axis of parabolic reflector 200 at a distance of 1/2 $R_P$ from the base of parabolic reflector 200. With these parameters satisfied, the collimated image rays from concave reflector 32 are focussed in the detector array plane. The axial ray of the collimated beam is reflected from concave reflector 32 at an angle of 90° and is incident upon the detector at an angle of 90° from the scanning disc axis. Of course, fold angles other than 90° and other positional distances for parabolic reflector 200 and linear array 40 may be used, but these parameters must be selected such that the rotational distortion introduced by each is nulled rather than exaggerated by the others. While Fig. 7 correctly illustrates the principle of folding and focussing the collimated image onto the scanning disc axis, the arrangement shown there is not practical under conditions of actual use since the detector array would be disposed directly in the path of the image rays entering the scanning system. One solution to this problem is illustrated in Fig. 8. The image rays from concave reflector 32 are folded by planar reflectors 208, 210 and 212 maintaining collimation. Thereafter, the image rays are incident upon a section of parabolic reflector 200 satisfying the conditions previously discussed with reference to Fig. 7.

Although the off-axis parabolic reflector effectively eliminates walk-off, it introduces optical rotation about the orthogonal axis of the linear array. As the concave reflector scans the image in its arc of sweep the correct focal point for off-axis detector positions varies, introducing defocus at points away from the midpoint of the array. This defocus problem could be solved by rotating the detector array about the orthogonal axis during the scan to maintain proper focus, but rotation of the detector array is impractical and would introduce mechanical limitations. The amount of defocus is tolerable for many applications since satisfactory resolution may be maintained over several detector elements. The embodiment in Fig. 8 with the off-axis parabolic reflector achieves a solution of the walk-off problem and forms a collection optic in a single optical surface.

In Figures 9 and 10 the fourth embodiment of the invention is illustrated wherein the walk-off problem is solved without the defocus introduced by the parabolic reflector. This embodiment involves the use of a paraboloidal roof mirror and provides greater precision where accurate focussing over the entire length of the detector array is critical.

A suitable paraboloidal roof mirror 221 is shown in Figures 9 ahd 10 including sections 220 and 222 taken from convex and concave parabolic surfaces 224 and 226, respectively. Roof mirrors are described generally in the article "Image Rotation Devices" by D.W. Swift, Optics and Laser Technology, 8/1972, p. 184—185. The base radii of curvature of the parabolic surfaces 224 and 226 are chosen and aligned such that these surfaces share a common focus 228 ahd a common axis 230. To eliminate walk-off, $R_I$, the radius of intersection of paraboloids 224 and 226, should equal twice the scanning disc radius $R_D$ (Figures 5 and 10).

The intersection of the convex and concave paraboloids creates a perfect 90° roof mirror in both the radial and tangential directions for an infinitesimal area at the point of intersection. In general, the image reflected from a roof mirror will be rotated through an angle equal to twice the angle of roof mirror rotation about an axis perpendicular to the line of intersection of the two roof mirror halves. In the present embodiment, the 90° roof created by the paraboloidal roof mirror, in effect, rotates about such an axis as a function of the image rotation introduced by the angular position of the scanning sweep. The image rotation about the axis of the concave reflector, which the present embodiment corrects, corresponds to the scan angle. In relation to the axis perpendicular to the paraboloidal intersection the rotated image from the concave reflector is incident upon the paraboloidal roof mirror rotated in the opposite direction to the rotation caused by the scan angle.

When $R_I$ is equal to twice $R_D$ the resulting angular rotation about the axis perpendicular to the paraboloidal intersection equals one-half the angular rotation of the image about the concave reflector axis. Therefore, for any given scan angle, the image incident upon the paraboloidal roof mirror is rotated about the axis perpendicular to the paraboloidal intersection in the opposite direction to the image rotation caused by the scanning sweep by an angle equal to one-half the scan angle. Since the paraboloidal roof rotates an image by twice the angle of rotation about the axis of paraboloidal intersection, the image reflected from the paraboloidal roof mirror will be rotated in the opposite direction to the image rotation caused by the scan angle by an amount equal to the scan angle.

Therefore, perfect nulling of the image rotation caused by the scanning sweep is achieved. Advantageously, the paraboloidal roof mirror does not introduce defocus and, therefore, may be used when accurate focussing is critical.

In practice, the paraboloidal roof mirror must be positioned so that the emerging image can be distinguished from the incident image. In other words, the incident image cannot be retroreflected upon itself as it would be if the axis perpendicular to intersection of the paraboloids was positioned coincident with the axis of the incident image beam.

The paraboloidal roof mirror 221 is positioned as shown in Fig. 10. The image rays from concave reflector 32 are incident upon the convex paraboloidal reflector section 220 away from the common intersection 223 of the paraboloidal reflectors. The lateral displacement t of the paraboloidal roof mirror corresponds to the entry pupil required to accommodate the collimated image beam from concave reflector 32. The chief rays are reflected from convex paraboloidal reflector section 220 at an angle approximating, but not equal to, 90° since the image is reflected from the convex paraboloidal reflector section 220 at a height higher than common intersection 223. Therefore, the rays reflected from the convex paraboloid are incident upon and reflected from concave paraboloidal reflector section 222 at a slightly greater height than the exit pupil from convex paraboloidal section 220. The difference in entering and emerging ray heights for paraboloidal roof mirror 221 must be sufficient to provide non-overlapping pupils for paraboloidal eflector sections 220 and 222. Although the internal reflections of the paraboloidal roof mirror, as positioned, are not precisely at angles of 90°, for $R_I$ equal to twice $R_D$ precise correction of walk-off is achieved.

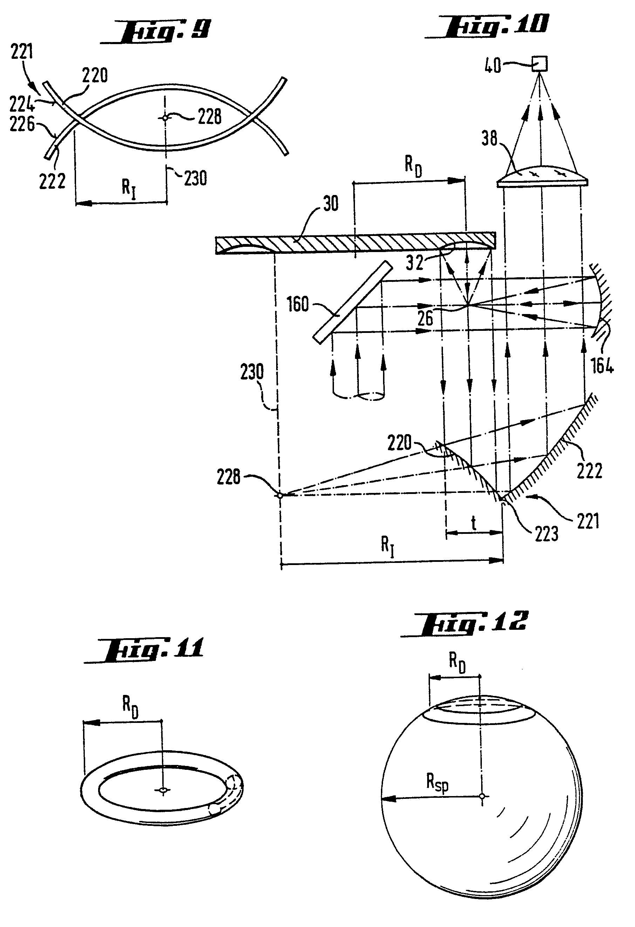

The fifth preferred embodiment of the invention relates to curved strip mirror configurations which achieve the desirable traits of the conical strip mirror section, that is, intercepting all rays from the field of view in a similar manner to create a collimated or telecentric image reflected from the concave reflectors without vignetting during the disc scan. Generally, any toroidal mirror having one of its radii equal to the scanning disc radius $R_D$ (Figures 7 and 8) may be used. Examples of bodies from which strip mirror sections may be taken are shown in Figures 11 and 12. Fig. 11 illustrates a toroidally shaped body with a radius corresponding to $R_D$ from which a strip mirror section may be taken. Fig. 12 illustrates a spherically shaped body from which a strip mirror section with a radius of $R_D$ may be taken. Typically, the incoming image will be reflected upward to the concave reflectors from the strip mirror at a 90° angle. To obtain a strip mirror section with a radius of $R_d$ taken from a spherical surface that will reflect the image at a 90° angle, the radius of the sphere $R_{sp}$ should equal 2 $R_d$. Depending upon the particular application, various ratios of the radius of curvature of the strip mirror configuration to $R_D$ and various cross-sectional shapes of the strip mirror (i.e., circular, elliptical, etc.) may be used. For small, instaneous fields of view, aberrations due to differences in these structures are small and relatively insignificant.

Although air is the most common optical medium through which the image forming radiation passes, particularly between the various optical elements, other transmissive media, e.g., glass, can be used with minor adjustments.

## Claims

1. A scanning system wherein a scene is scanned in an orthogonal pattern including means for producing linear scanning traces in one of the orthogonal directions, characterized in that it comprises a strip mirror (26), an imaging means producing, in succession, said linear scanning traces on said strip mirror, a rotating disk (30) including a circular array of concave reflectors (32) on a plane surface thereof for scanning in the other orthogonal direction; said strip mirror (26, Fig. 1) being separated from said concave reflectors (32) by a predetermined distance; radiation detecting means (40) positioned to detect the intensity of radiation reflected by said concave reflectors (32); whereby said predetermined distance is chosen so that radiation reflected from said strip mirror (26) is directly focussed by said concave reflectors (32) onto the radiation detecting means (40).

2. The system of claim 1 wherein said strip mirror (26) is curved and said concave reflectors (32) focus radiation reflected from said strip mirror in an arc of focal points corresponding to the scanning sweep of the concave reflector.

3. The system of claim 1 wherein said radiation detecting means (40) is formed in an arc corresponding to the arc of focal points and positioned to receive radiation reflected from said concave reflectors (32).

4. The system of claims 1 to 3 wherein said concave reflectors (32) are ellipsoidal with said strip mirror (26) positioned at the first focus and said radiation detection means (40) positioned at the second focus of said ellipsoidal reflector.

5. A scanning system wherein a scene is scanned in an orthogonal pattern including means for producing linear scanning traces in one of the orthogonal directions, characterized in that it comprises a strip mirror (26), an imaging means producing, in succession, said linear scanning traces on said strip mirror, a rotating disk (30) including a circular array of concave reflectors (32) on a plane surface thereof for scanning in the other orthogonal direction; said strip mirror (26) being separated from said concave reflectors (32) by a predetermined distance; radiation detecting means (40) positioned to detect the intensity of radiation reflected by said concave reflectors (32); whereby said strip mirror is curved and configured as a section of a toroidal surface having a radius equal to the radius of the arc formed by said concave reflectors (32) on said scanning disk (30).

6. A scanning system wherein a scene is scanned in an orthogonal pattern including means for producing linear scanning traces in one of the orthogonal directions, characterized in that it comprises a strip mirror (26), an imaging means producing, in succession, said linear scanning traces on said strip mirror, a rotating disk (30) including a circular array of concave reflectors (32) on a plane surface thereof for scanning in the other orthogonal direction; said strip mirror (26) being separated from said concave reflectors (32) by a predetermined distance; radiation detecting means (40) positioned to detect the intensity of radiation reflected by said concave reflectors (32); whereby said strip mirror (26) is curved and configured as a section of a spherical surface and having a radius in a plane parallel to the plane surface of said scanning disk (30) equal to the radius of the arc formed by said concave reflectors (32) on said scanning disk.

7. A scanning system wherein a scene is scanned in an orthogonal pattern including means for producing linear scanning traces in one of the orthogonal directions, characterized in that it comprises a strip mirror (26), an imaging means producing, in succession, said linear scanning traces on said strip mirror, a rotating disk (30) including a circular array of concave reflectors (32) on a plane surface thereof for scanning in the other orthogonal direction; said strip mirror (26) being separated from said concave reflectors (32) by a predetermined distance; radiation detecting means (40) positioned to detect the intensity of radiation reflected by said concave reflectors (32); whereby said predetermined distance is equal to the focal length of the concave reflectors (32); a parabolical roof mirror (220, 222 Fig. 10) positioned in the optical path of the collimated beam from said concave reflectors (32); focussing means (38) positioned in the optical path between said roof mirror and said radiation detecting means (40) for focussing said collimated beam onto the radiation detecting means (40).

8. The system of claim 7 wherein the radius of intersection ($R_I$, Fig. 9) of the paraboloids (224, 226) constituting the roof mirror (220, 222) is equal to twice the distance ($R_D$, Fig. 10) from the center of the rotating disk (30) to the center of any one of the scanning reflectors (32).

9. A scanning system wherein a scene is scanned in an orthogonal pattern including means for producing linear scanning traces in one of the orthogonal directions, characterized in that it comprises a strip mirror (26), an imaging means producing, in succession, said linear scanning traces on said strip mirror, a rotating disk (30) including a circular array of concave reflectors (32) on a plane surface thereof for scanning in the other orthogonal direction; said strip mirror (26) being separated from said concave reflectors (32) by a predetermined distance; radiation detecting means (40) positioned to detect the intensity of radiation reflected by said concave reflectors (32); whereby said predetermined distance is equal to the focal length of the concave reflectors; focussing means positioned in the collimated beam in the optical path between the concave reflectors (32) and the radiation detecting means (40); and whereby potential spurious radiation surfaces have reflective covering and are oriented so that radiation from the radiation detecting means is reflected back to said detecting means.

10. The system of claim 9 further comprising means (270) for defining a collection aperture corresponding to the scanning sweep of said rotating scanning disk.

11. The system of claim 10 wherein said means for defining a collection aperture comprises a cold shield (270) and a spherical baffle mirror (272).

12. The system of claim 11 comprising thermal baffling in the area of said detecting means.

13. The system of claim 12 further comprising means (290) for shading a portion of said collection aperture.

**Patentansprüche**

1. Eine Vorrichtung zum orthogonalen optischen Abtasten bzw. Zerlegen und/oder Aufbau einer Szene mit einer Einrichtung zum Erzeugen linearer Abtastlinien in einer der orthogonalen Richtungen, dadurch gekennzeichnet, daß die Vorrichtung einen Bandspiegel (26), eine Vorrichtung zum schrittweisen Erzeugen der genannten linearen Abtastlinien auf dem genannten Bandspiegel, eine rotierende Scheibe (30) mit kreisförmig auf ihrer planen Oberfäche angeordneten Konkav-Reflektoren (32) zum optischen Abtasten bzw. Zerlegen in der anderen orthogonalen Richtung aufweist; wobei der genannte Bandspiegel (26, Fig. 1) in einem vorbestimmten Abstand von den genannten Konkav-Reflektoren (32) angeordnet ist; eine Strahlendetektor-Einrichtung (40), die so angeordnet ist, um die Intensität der von den genannten Konkav-Reflektoren (32) reflektierten Strahlung zu erfassen; wobei der genannte vorbestimmte Abstand so gewählt ist, daß die vom Bandspiegel (26) reflektierte Strahlung von den Konkav-Reflektoren (32) direkt auf die Strahlendetektor-Einrichtung (40) fokussiert wird.

2. Die Vorrichtung nach Anspruch 1, dadurch gekennzeichnet, daß der genannte Bandspiegel (26) gekrümmt ist und daß die genannten Konkav-Reflektoren (32) die vom Bandspiegel reflektierte Strahlung in bogenförmig angeordneten Brennpunkten fokussieren, die dem Abtastbereich des Konkav-Reflektors entsprechen.

3. Die Vorrichtung nach Anspruch 1, dadurch gekennzeichnet, daß die Strahlendetektor-Einrichtung (40) in einem den bogenförmig angeordneten Brennpunkten entsprechenden Bogen angeordnet ist und die von den genannten Reflektoren (32) reflektierte Strahlung aufnimmt.

4. Die Vorrichtung nach den Ansprüchen 1 bis 3, dadurch gekennzeichnet, daß die genannten Konkav-Reflektoren (32) eine elliptische Oberfläche aufweisen und der genannte Bandspiegel (26) im ersten und die genannte Strahlendetektor-Einrichtung (40) im zweiten Brennpunkt der ellipsenförmigen Reflektoranordnung angeordnet sind.

5. Eine Vorrichtung zum orthogonalen optischen Abtasten bzw. Zerlegen und/oder Aufbau einer Szene mit einer Einrichtung zum Erzeugen linearer Abtastlinien in einer der orthogonalen Richtungen, dadurch gekennzeichnet, daß die Vorrichtung einen Bandspiegel (26), eine Vorrichtung zum schrittweisen Erzeugen der genannten linearen Abtastlinien auf dem genannten Bandspiegel, eine rotierende Scheibe (30) mit kreisförmig auf ihrer planen Oberfäche angeordneten Konkav-Reflektoren (32) zum optischen Abtasten bzw. Zerlegen in der anderen orthogonalen Richtung aufweist; wobei der genannte Bandspiegel (26) in einem vorbestimmten Abstand von den Konkav-Reflektoren (32) angeordnet ist; eine Strahlendetektor-Einrichtung (40), die so angeordnet ist, um die Intensität der von den genannten Konkav-Reflektoren (32) reflektierten Strahlung zu erfassen; wobei der genannte Bandspiegel gekrümmt und als Teil einer toroidalen Oberfläche ausgebildet ist, deren Radius gleich dem von den auf der Scheibe (30) angeordneten Konkav-Reflektoren (32) beschriebenen Bogen ist.

6. Eine Vorrichtung zum orthogonalen optischen Abtasten bzw. Zerlegen und/oder Aufbau einer Szene mit einer Einrichtung zum Erzeugen linearer Abtastlinien in einer der orthogonalen Richtungen, dadurch gekennzeichnet, daß die Vorrichtung einen Bandspiegel (26), eine Vorrichtung zum schrittweisen Erzeugen der genannten linearen Abtastlinien auf dem genannten Bandspiegel, eine rotierende Scheibe (30) mit kreisförmig auf ihrer planen Oberfäche angeordneten Konkav-Reflektoren (32) zum optischen Abtasten bzw. Zerlegen in der anderen orthogonalen Richtung aufweist; wobei der genannte Bandspiegel (26) in einem vorbestimmten Abstand von den Konkav-Reflektoren (32) angeordnet ist; eine Strahlendetektor-Einrichtung (40), die so angeordnet ist, um die Intensität der von den genannten Konkav-Reflektoren (32) reflektierten Strahlung zu erfassen; wobei der genannte Bandspiegel gekrümmt und als Teil einer sphärischen Oberfläche ausgebildet ist, deren Radius in einer Ebene parallel zur Oberfläche der Scheibe (30) gleich dem von den auf der Scheibe (30) angeordneten Konkav-Reflektoren (32) beschriebenen Bogen ist.

7. Eine Vorrichtung zum orthogonalen optischen Abtasten bzw. Zerlegen und/oder Aufbau einer Szene mit einer Einrichtung zum Erzeugen linearer Abtastlinien in einer der orthogonalen Richtungen, dadurch gekennzeichnet, daß die Vorrichtung einen Bandspiegel (26), eine Vorrichtung zum schrittweisen Erzeugen der genannten linearen Abtastlinien auf dem genannten Bandspiegel, eine rotierende Scheibe (30) mit kreisförmig auf ihrer planen Oberfäche angeordneten Konkav-Reflektoren (32) zum optischen Abtasten bzw. Zerlegen in der anderen orthogonalen Richtung aufweist; wobei der genannte Bandspiegel (26) in einem vorbestimmten Abstand von den Konkav-Reflektoren (32) angeordnet ist; eine Strahlendetektor-Einrichtung (40), die so angeordnet ist, um die Intensität der von den genannten Konkav-Reflektoren (32) reflektierten Strahlung zu erfassen; wobei der vorbestimmte Abstand der Brennweite der Konkav-Reflektoren (32) entspricht; einen parabolischen Dachspiegel (220, 222, Fig. 10), der im optischen Strahlengang des von den Konkav-Reflektoren (32) kollimierten Strahls angeordnet ist; eine Fokussier-Einrichtung (38), die im optischen Strahlengang zwischen dem genannten parabolischen Dachspiegel und der Strahlendetektor-Einrichtung angeordnet ist, um den kollimierten Strahl auf die Vorrichtung (40) zu fokussieren.

8. Die Vorrichtung nach Anspruch 7, dadurch gekennzeichnet, daß der Radius der Schnittpunkte ($R_I$, Fig. 9) der Paraboloide (224, 226), die den Dachspiegel (220, 222) bilden, gleich dem doppelten Abstand ($R_D$, Fig. 10) zwischen dem Mittelpunkt der rotierenden Scheibe (30) und dem Mittelpunkt eines der Konkav-Reflektoren (32) ist.

9. Eine Vorrichtung zum orthogonalen optischen Abtasten bzw. Zerlegen und/oder Aufbau einer Szene mit einer Einrichtung zum Erzeugen linearer Abtastlinien in einer der orthogonalen Richtungen, dadurch gekennzeichnet, daß die Vorrichtung einen Bandspiegel (26), eine Vorrichtung zum schrittweisen Erzeugen der genannten linearen Abtastlinien auf dem genannten Bandspiegel, eine rotierende Scheibe (30) mit kreisförmig auf ihrer planen Oberfäche angeordneten Konkav-Reflektoren (32) zum optischen Abtasten bzw. Zerlegen in der anderen orthogonalen Richtung aufweist; wobei der genannte Bandspiegel (26) in einem vorbestimmten Abstand von den Konkav-Reflektoren (32) angeordnet ist; eine Strahlendetektor-Einrichtung (40), die so angeordnet ist, um die Intensität der von den Konkav-Reflektoren (32) reflektierten Strahlung zu erfassen; wobei der genannte vorbestimmte Abstand der Brennweite der Konkav-Reflektoren (32) entspricht; eine Fokussier-Einrichtung, angeordnet im kollimierten Strahl im optischen Strahlengang zwischen den Konkav-Reflektoren (32) und der Strahlendetektor-Einrichtung (40); und wobei Oberflächen, die potentielle Quellen für Fremdstrahlen sind, mit einer reflektierenden Schicht versehen und so angeordnet sind, daß von der Strahlendetektor-Einrichtung ausgehende Strahlung auf diese zurückreflektiert wird.

10. Die Vorrichtung nach Anspruch 9, dadurch gekennzeichnet, daß diese weiterhin eine Einrichtung (270) zum Bestimmen einer dem Abtastbereich der rotierenden Abtastscheibe entsprechenden Sammelöffnung aufweist.

11. Die Vorrichtung nach Anspruch 10, dadurch gekennzeichnet, daß die Einrichtung zum Bestimmen einer Sammelöffnung einen Kälteschild (270) und einen sphärischen Ablenkspiegel (272) enthält.

12. Die Vorrichtung nach Anspruch 11, dadurch gekennzeichnet, daß diese im Bereich der genannten Detektor-Einrichtung Wärmeabschirmungen aufweist.

13. Die Vorrichtung nach Anspruch 12, dadurch gekennzeichnet, daß diese weiterhin eine Einrichtung (290) zum Beschatten eines Teils der genannten Sammelöffnung aufweist.

**Revendications**

1. Un système d'exploration dans lequel une vue est explorée dans une configuration orthogonale qui inclue des moyens destinés à produire des traces d'exploration linéaires dans une des directions orthogonales, caractérisé en ce qu'il comprend un miroir en bande (26), un moyen d'imagerie produisant, de façon successive, lesdites traces d'exploration linéaires sur ledit miroir en bande, un disque rotatif (30) qui inclue, sur une surface plane, un réseau circulaire de réflecteurs concaves (32) pour explorer dans l'autre direction orthogonale; ledit miroir en bande (26, Fig. 1) étant séparé desdits réflecteurs concaves (32) par une distance prédéterminée; un moyen (40) de détection de rayonnement positionné pour détecter l'intensité de rayonnement réfléchi par lesdits réflecteurs concaves (32); ladite distance prédéterminée étant choisie pour que le rayonnement réfléchi depuis ledit miroir en bande (26) soit directement focalisé par lesdits réflecteurs concaves (32) sur le moyen (40) de détection de rayonnement.

2. Le système selon la revendication 1 dans lequel ledit miroir en bande (26) est incurvé et lesdits réflecteurs concaves (32) focalisent un rayonnement réfléchi depuis ledit miroir en bande dans un arc de points focaux correspondant au balayage d'exploration du réflecteur concave.

3. Le système selon la revendication 1 dans lequel ledit moyen (40) de détection de rayonnement est formé dans un arc correspondant à l'arc de points focaux et positionné pour recevoir un rayonnement réfléchi depuis lesdits réflecteurs concaves (32).

4. Le système selon les revendications 1 à 3 dans lequel lesdits réflecteurs concaves (32) sont ellipsoïdaux, ledit miroir en bande (26) étant positionné au premier foyer et ledit moyen (40) de détection de rayonnement étant positionné au second foyer dudit réflecteur ellipsoïdal.

5. Un système d'exploration dans lequel une vue est explorée dans une configuration orthogonale qui inclue des moyens destinés à produire des traces d'exploration linéaires dans une des directions orthogonales, caractérisé en ce qu'il comprend un miroir en bande (26), un moyen d'imagerie produisant, de façon successive, lesdites traces d'exploration linéaires sur ledit miroir en bande, un disque rotatif (30) qui inclue, sur une surface plane, un réseau circulaire de réflecteurs concaves (32) pour explorer dans l'autre direction orthogonale; ledit miroir en bande (26) étant séparé desdits réflecteurs concaves (32) par une distance prédéterminée; un moyen (40) de détection de rayonnement positionné pour détecter l'intensité de rayonnement réfléchi par lesdits réflecteurs concaves (32); ledit miroir en bande étant incurvé et configuré comme une section d'une surface toroïdale présentant un rayon égal au rayon de l'arc formé par lesdits réflecteurs concaves (32) sur ledit disque d'exploration (30).

6. Un système d'exploration dans lequel une vue est explorée dans une configuration orthogonale qui inclue des moyens destinés à produire des traces d'exploration linéaires dans une des directions orthogonales, caractérisé en ce qu'il comprend un miroir en bande (26), un moyen d'imagerie produisant, de façon successive, lesdites traces d'exploration linéaires sur ledit miroir en bande, un disque rotatif (30) qui inclue, sur une surface plane, un réseau circulaire de réflecteurs concaves (32) pour explorer dans l'autre direction orthogonale; ledit miroir en bande (26) étant séparé desdits réflecteurs concaves (32) par une distance prédéterminée; un moyen (40) de détection de rayonnement positionné pour détecter l'intensité de rayonnement réfléchi par lesdits réflecteurs concaves (32); ledit miroir en bande étant incurvé et configuré comme une section d'une surface sphérique et présentant un rayon dans un plan parallèle à la surface plane dudit disque d'exploration (30) égal au rayon de l'arc formé par lesdits réflecteurs concaves (32) sur ledit disque d'exploration (30).

7. Un système d'exploration dans lequel une vue est explorée dans une configuration orthogonale qui inclue des moyens destinés à produire des traces d'exploration linéaires dans une des directions orthogonales, caractérisé en ce qu'il comprend un miroir en bande (26), un moyen d'imagerie produisant, de façon successive, lesdites traces d'exploration linéaires sur ledit miroir en bande, un disque rotatif (30) qui inclue, sur une surface plane, un réseau circulaire de réflecteurs concaves (32) pour explorer dans l'autre direction orthogonale; ledit miroir en bande (26) étant séparé desdits réflecteurs concaves (32) par une distance prédéterminée; un moyen (40) de détection de rayonnement positionné pour détecter l'intensité de rayonnement réfléchi par lesdits réflecteurs concaves (32); ladite distance prédéterminée étant égale à la longueur focale des réflecteurs concaves (32); un miroir en toit parabolique (220, 222 Fig. 10) positionné dans le chemin optique du faisceau collimaté depuis lesdits réflecteurs concaves (32); des moyens de focalisation (38) positionnés dans le chemin optique entre ledit miroir en toit et ledit moyen (40) de détection de rayonnement pour focaliser ledit faisceau collimaté sur le moyen (40) de détection de rayonnement.

8. Le système selon la revendication 7 dans lequel le rayon d'intersection ($R_I$, Fig. 9) des paraboloïdes (224, 226) constituant le miroir en toit (220, 222) est égal à deux fois la distance ($R_D$, Fig. 10) du centre du disque rotatif (30) au centre d'un quelconque des réflecteurs d'explorations (32).

9. Un système d'exploration dans lequel une vue est explorée dans une configuration orthogonale qui inclue des moyens destinés à produire des traces d'exploration linéaires dans une des directions orthogonales, caractérisé en ce qu'il comprend un miroir en bande (26), un moyen d'imagerie produisant, de façon successive, lesdites traces d'exploration linéaires sur ledit miroir en bande, un disque rotatif (30) qui inclue, sur une surface plane, un réseau circulaire de réflecteurs concaves (32) pour explorer dans l'autre direction orthogonale; ledit miroir en bande (26) étant séparé desdits réflecteurs concaves (32) par une distance prédéterminée; un moyen (40) de détection de rayonnement positionné pour détecter l'intensité de rayonnement réfléchi par lesdits réflecteurs concaves (32); ladite distance prédéterminée étant égale à la longueur focale des réflecteurs concaves; des moyens de focalisation positionnés dans le faisceau collimaté dans le chemin optique entre les réflecteurs concaves (32) et le moyen (40) de détection de rayonnement; et les surfaces parasites potentielles de rayonnement possédant des revêtements réfléchissants et étant orientées de manière à ce que le rayonnement du moyen de détection de rayonnement soit réfléchi en retour vers ledit moyen de détection.

10. Le système selon la revendication 9 comprenant de plus un moyen (270) pour définir une fente de collection correspondant au balayage d'exploration dudit disque d'exploration rotatif.

11. Le système selon la revendication 10 dans lequel ledit moyen pour définir une fente de collection comprend un blindage à froid (270) et un miroir déflecteur sphérique (272).

12. Le système selon la revendication 11 comprenant une déflection thermique dans la zone dudit moyen de détection.

13. Le système selon la revendication 12 comprenant de plus un moyen (290) destiné à obturer une partie de ladite fente de collection.

## Fig. 1

# Fig. 2

Fig. 3

Fig. 4

Fig. 4A

Fig. 4B

Fig. 4C

## Fig. 5A

## Fig. 5B

## Fig. 6

## Fig. 7

## Fig. 8

*Fig. 9*

*Fig. 10*

*Fig. 11*

*Fig. 12*